(19) Europäisches Patentamt

European Patent Office

Office européen des brevets

(11) **EP 0 773 509 B1**

(12) **EUROPEAN PATENT SPECIFICATION**

(45) Date of publication and mention
of the grant of the patent:
**17.04.2002 Bulletin 2002/16**

(51) Int Cl.7: **G06K 11/18**, G06F 1/32

(21) Application number: **96307908.2**

(22) Date of filing: **31.10.1996**

(54) **Coordinate indicator or device, for use jointly with coordinate reading device**

Koordinatenanzeiger oder Vorrichtung zum Gebrauch mit Koordinatenablesevorrichtung

Indicateur de coordonnée ou dispositif, pour utilisation avec dispositif de lecture de coordonnées

(84) Designated Contracting States:
**DE FR GB IT**

(30) Priority: **10.11.1995 JP 29315295**

(43) Date of publication of application:
**14.05.1997 Bulletin 1997/20**

(73) Proprietor: **Seiko Instruments Information Devices Inc.**
**Chiba-shi, Chiba (JP)**

(72) Inventor: **Morita, Yoshiyuki**
**Mihama-ku, Chiba-shi, Chiba (JP)**

(74) Representative: **Sturt, Clifford Mark et al**
**Miller Sturt Kenyon**
**9 John Street**
**London WC1N 2ES (GB)**

(56) References cited:
**EP-A- 0 587 200**          **WO-A-96/16368**
**US-A- 5 355 100**

• **PATENT ABSTRACTS OF JAPAN vol. 016, no. 418 (P-1413), 3 September 1992 & JP 04 140818 A (HITACHI SEIKO LTD), 14 May 1992,**

**Description**

The present invention relates a coordinate reading device which is adapted to output a coordinate value to an external device such as a computer. More particularly, the invention concerns a coordinate indicator or device that is used jointly with the coordinate reading device.

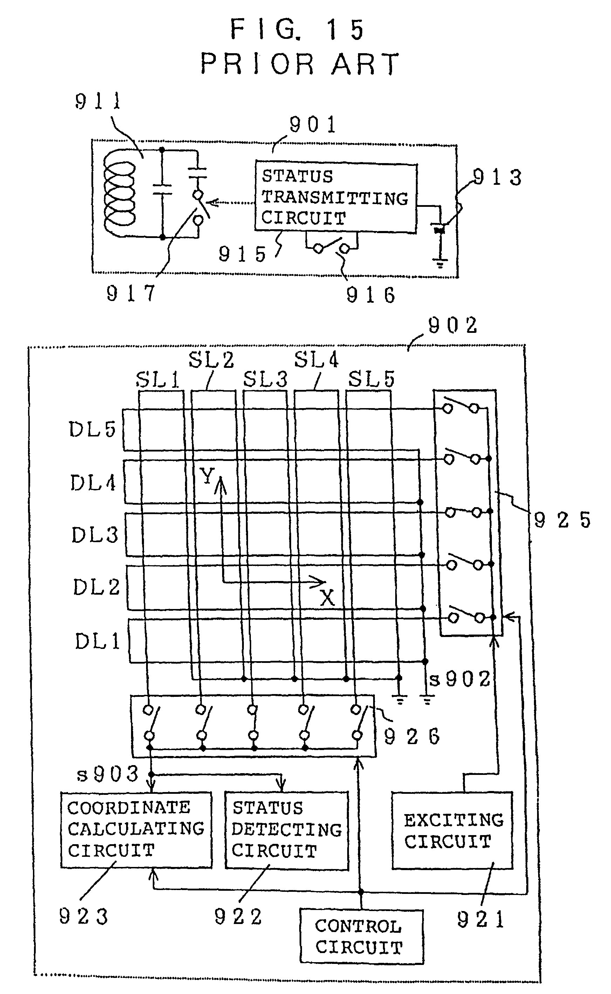

As a coordinate indicator used jointly with a conventional coordinate reading device, there is known that which has a construction as illustrated in Fig. 15. The construction and operation thereof will now be explained with reference to this figure.

A resonant circuit 911 includes a coil and a capacitor and resonates upon receipt of an excitation signal generated from a tablet 902 and thereby reflects a signal to the tablet 902. With the resonant circuit 911 there is connected in parallel a series circuit composed of a secondary capacitor and a switch element 917. A status transmitting circuit 915 inputs an "on" or "off" state of a status switch 916 and outputs to the switch element 917 a control signal for making the switch element 917 "on" or "off" according to this "on" or "off" state thereof. Since the switch element 917 is made "on" or "off" according to this control signal, the secondary capacitor is selectively connected to or disconnected from the resonant circuit 911. In such a way as mentioned above, the resonant frequency varies in correspondence with the "on" or "off" operation of the status switch 916, with the result that the reflected wave from the resonant circuit 911 to the tablet 902 has its phase data varied. These operations are performed by an electric energy supplied from a battery 913.

On the other hand, on the tablet 902 there are laid a plurality of exciting lines DL1 to DL5 and a plurality of sense lines SL1 to SL5 that intersect these exciting lines at a right angle with respect thereto. The exciting lines DL1 to DL5 and the sense lines SL1 to SL5 have their respective lines selected one by one by an exciting side scanning circuit 925 and a detecting side scanning circuit 926, respectively. To the selected exciting line-there is supplied an excitation signal s902 from an exciting circuit 921, whereby the exciting line generates an electromagnetic wave. On the other hand, in the selected sense line there is induced an induction signal s903 as a result of the reflection made by the resonant circuit 911. This induction signal s903 is input to a coordinate calculating circuit 923 and to a status detecting circuit 922, whereby a relevant coordinate value and an "on" or "off" state of the status switch 916 of the coordinate indicator 901, i.e. a status thereof, are detected.

However, in the conventional coordinate indicator, since the battery 913 is connected at all times to the status transmitting circuit 915, the electric energy was consumed at all times. For example, even when the coordinate indicator 901 was not located on the tablet 902 and therefore was not functioning as a coordinate indicator, the energy was consumed uselessly.

Meanwhile, as a coordinate indicator there is what is called "a stylus pen" that is shaped like a pen which is a writing instrument. A battery which is very large in size cannot be loaded on this pen because of a limitation imposed thereon from the shape per se. Therefore, there has been a demand for minimising the consumption of the battery.

US 5355100, EP 0587200A, Japan Abstract 0414018A all describe arrangements for reducing the consumption of the battery.

US 5355100 describes a battery powered magnetic pen including an oscillator which can generate a contact frequency and a proximity frequency. The pen includes a timer such that if a tip switch of the pen is continuously activated the oscillator is inhibited to prevent battery discharge.

EP 0587200A discloses a position detection apparatus including a pointer with a tuning circuit which receives signals when the pointer is positioned in the vicinity of a position detecting section of the apparatus. The pointer includes a switch which is operated to change the phase of the current in the tuning circuit when the pointer contacts the position detecting section of the apparatus.

This prior art is acknowledged in the preamble of claim 1.

Japan Abstract 0414018A discloses a coordinate reader having a surface plate which generates a signal in a prescribed period. A stylus pen positioned in close proximity to the plate in the prescribed period is enabled to generate a signal which is communicated to the surface plate.

The present invention has been made in order to solve the above-mentioned problems and has the following objects.

(1) To realise a device which is used jointly with the coordinate reading device and whose power consumption can be decreased; and,

(2) To realise a coordinate indicator which is used jointly with the coordinate reading device and whose power consumption can be decreased.

In a first aspect, this invention provides a device for performing a prescribed operation through an electromagnetic coupling with a tablet constituting a co-ordinate reading device, the device comprising:

a power source means, a functioning means for operating by receiving an electric energy from the power source means, a switch means provided between the power source means and the functioning means, and a control means for outputting a signal for controlling "on"/"off" operations of the switch means, and characterised by further comprising;

a resonant circuit, wherein the control means outputs a signal which makes the switch means ON, whereby the electrical energy is supplied to the functioning means, when a state of electromagnetic coupling of the resonant circuit with the tablet is greater than a predetermined coupling intensity value.

In order to solve the above-mentioned problems, as a first construction regarding the device according to the present invention, there is provided a device wherein the tablet comprises a coordinate reading device and the device is adapted to perform a prescribed operation with the coordinate reading device;

and wherein the resonant circuit has a resonant frequency which is substantially equal to a frequency of an electromagnetic wave generated from the tablet;

characterised in that the control means comprises an induction signal detection circuit for detecting an induction signal induced in the resonant circuit and for outputting a detection signal when the resonant circuit substantially resonates with the electromagnetic wave;

the switch means comprises a power source switch circuit connected to a power source supply line of the power source means for making a circuit thereof close by a detection signal outputted from the induction signal detecting means and for connecting the power source means to respective portions of the device;

and the functioning means comprises a utilising circuit receptive a power source supply from the power source means when the power source switch circuit is closed for performing its prescribed operation.

Further, the device may comprise a co-ordinate indicator and the utilising circuit comprises a status transmitting means for transmitting a status to the tablet.

Further, as a second construction regarding the coordinate indicator according to the present invention, the status transmitting means is connected to the resonant circuit.

Further, as a further construction regarding a device according to the present invention, the utilising circuit may comprise a display device for displaying display data.

Advantageously, the display device displays display data transmitted from the tablet.

Specific embodiments of the invention will now be described, by way of example only, with reference to the accompanying diagrammatic figures, in which:

Fig. 1 is a functional block diagram illustrating an embodiment of a coordinate indicator according to the present invention.

Fig. 2 is a functional block diagram illustrating a coordinate reading device that uses the coordinate indicator according to the present invention.

Fig. 3 is a functional block diagram illustrating a coordinate calculating circuit of the coordinate reading device that uses the coordinate indicator according to the present invention.

Fig. 4 is a functional block diagram illustrating a status detecting circuit of the coordinate reading device that uses the coordinate indicator according to the present invention.

Fig. 5A is a graph showing a relationship between induction signal amplitude and coil position.

Fig. 5B is a view illustrating a coordinate calculation principle of the coordinate reading device that uses the coordinate indicator according to the present invention.

Fig. 6 is a view illustrating an induction signal of a tablet of the coordinate reading device that uses the coordinate indicator according to the present invention

Figs. 7A and 7B are views illustrating in a first state the relationship of the induction signal of the tablet relative to the position of a coil in the coordinate reading device that uses the coordinate indicator according to the present invention.

Figs. 8A and 8B are views illustrating in a second state the relationship of the induction signal of the tablet relative to the position of the coil in the coordinate reading device that uses the coordinate indicator according to the present invention.

Figs. 9A and 9B are views illustrating in a third state the relationship of the induction signal of the tablet relative to the position of the coil in the coordinate reading device that uses the coordinate indicator according to the present invention.

Fig. 10 is a view illustrating the relationship between a coordinate calculating variable and the position of the coil in the coordinate reading device that uses the coordinate indicator according to the present invention.

Fig. 11 is a graphic diagram illustrating an operational state of a power source switch relative to the induction signal in the coordinate indicator according to the present invention.

Fig. 12 is a view illustrating a status transmission timing in the coordinate reading device that uses the coordinate indicator according to the present invention.

Fig. 13 is a view illustrating a status transmission principle of the coordinate reading device that uses the coordinate indicator according to the present invention.

Fig. 14 is a functional block diagram illustrating an embodiment of a display device according to the present invention, and,

Fig. 15 is a functional block diagram illustrating a conventional coordinate reading device that uses a coordinate indicator.

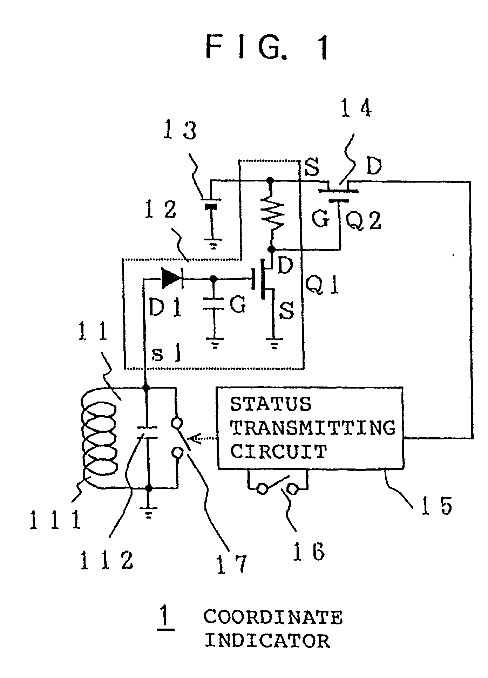

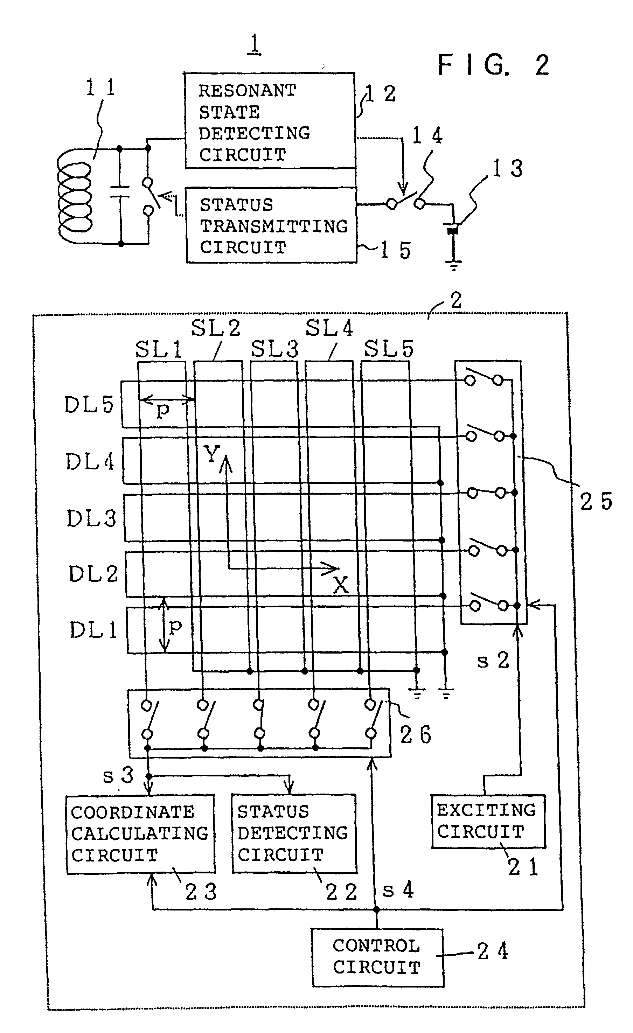

An embodiment of a coordinate indicator according to the present invention will first be explained. Figs. 1 and 2 are functional block diagrams of this embodiment. First, the construction of the coordinate indicator will be explained with reference to these figures.

Fig. 1 is a constructional block diagram illustrating a coordinate indicator 1. A resonant circuit 11 is constituted by a coil 111 and a capacitor 112. It is arranged that this resonant circuit 11 is shortcircuited by a switch element 17. In a normal state, the switch element 17 is kept open. In this state, the resonant circuit 11 resonates with an electromagnetic wave generated from a tablet as described later and transmits a reflected wave therefrom to the tablet. Accordingly, when the coil 111 is placed in an intersection area where a selected exciting line of the tablet as described later and a sense line of the tablet intersect each other, electromagnetic induction occurs through the resonant circuit, with the result that an induction signal generates from the sense line.

A resonant state detecting circuit 12 is connected to the resonant circuit 11. The resonant state detecting circuit 12 is composed of a wave detector circuit constituted by a diode D1 and a voltage detecting circuit constituted by an N-channel FET Q1. The gate of a power source switch element 14 constituted by a P-channel FET Q2 is connected to an output of the FET Q1. A battery 13 is connected to the source of the FET Q2, whereby a power is supplied from the drain thereof to a status transmitting circuit 15 as described later.

When the power source switch element 14 has been made "on" with the result that power has been supplied from the battery 13, the status transmitting circuit 15 reads the state of a status switch 16 provided thereon and makes the switch element 17 "on" or "off" according to the read status of the status switch 16.

In the case of, for example, what is called "a stylus pen" prepared by the coordinate indicator 1 being formed into a pen type, the status switch 16 means one which is made "on" or "off" by depressing the forward end of the pen core, the "on"/"off" data being transmitted to the tablet as data which indicates whether or not the stylus pen is in contact with the tablet.

Fig. 2 is an overall constructional view illustrating a coordinate reading device that uses the coordinate indicator 1 according to the present invention. On a tablet 2 there are laid exciting lines DL1 --- DL5 in the Y direction and sense lines SL1 --- SL5 in the X direction that intersect the Y direction orthogonally thereto. Each of these lines is prepared by, for example, a conducting wire being laid on a printed board in the form of a rectangular loop. The exciting lines as well as the sense lines are laid at equal intervals and at a pitch of (p). Although in Fig. 2 the exciting lines and sense lines are respectively provided five in number, the number of the lines is suitably set in conformity with a range having its coordinates needed to be read. The respective ends on one side of the exciting lines DL1 --- DL5 and sense lines SL1 --- SL5 are all grounded and the respective ends on the other side thereof are connected, in the case of the exciting lines DL1 --- DL5, to an exciting side scanning circuit 25 and, in the case of the sense lines SL1 --- SL5, to a detecting side scanning circuit 26. As described later, the exciting lines DL1 --- DL5 generate an a.c. magnetic field by an excitation signal. Also, the sense lines SL1 --- SL5 cause an induction signal to be induced therefrom.

Each of the exciting side scanning circuit 25 and detecting side scanning circuit 26 is composed of a plurality of electronic switch elements such as analog switches, and the terminals on one side of the switch elements are connected to each other to thereby constitute a common terminal. Each of these scanning circuits is also connected to a control circuit 24. When a selection signal s4 is supplied from the control circuit 24, one of the switch elements is closed and one end of the closed switch element is connected to the common terminal. To the respective terminals of each of these scanning circuits 25 and 26 there are respectively connected corresponding ones of the exciting lines DL1 --- DL5 and sense lines SL1 --- SL5. Also, the common terminal of the exciting side scanning circuit 25 is connected to an exciting circuit 21 while, on the other hand, the common terminal of the detecting side scanning circuit 26 is connected to a coordinate calculating circuit 23 and to a status detecting circuit 22.

The exciting circuit 21 supplies an excition signal s2 to the exciting line selected by the exciting side scanning circuit 25. The excitation signal s2 is an a.c. signal having a frequency of, for example, 614. 4 kHz or so. However, the frequency of this signal is not limited to this frequency and any signal may be used as this signal provided it can cause electromagnetic induction between the exciting lines DL1 --- DL5 and sense lines SL1 -- SL5 and the coordinate indicator 1.

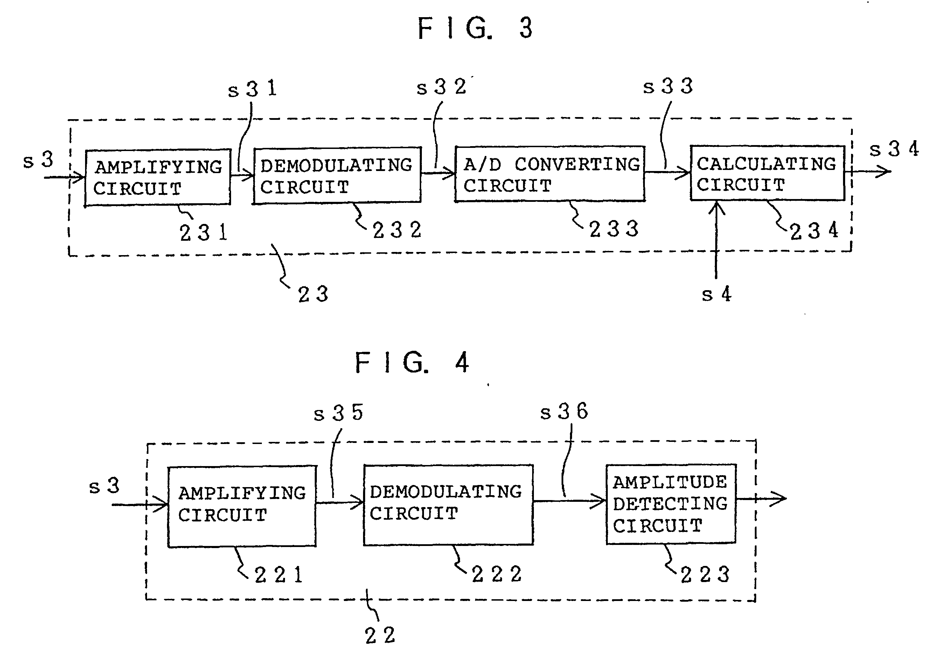

The coordinate calculating circuit 23 is connected to the detecting side scanning circuit 26 and to the control circuit 24. The internal structure of this circuit is illustrated in Fig. 3. As illustrated, the coordinate calculating circuit 23 is composed of an amplifying circuit 231, demodulating circuit 232, A/D converting circuit 233 and calculating circuit 234. The amplifying circuit 231 is connected to the detecting side scanning circuit 26 and inputs an induction signal s3 that has been induced in the sense lines. The calculating circuit 234 is also connected to the control circuit 24 and inputs a selection signal s4 for the scanning circuit. The induction signal s3 that has been induced in the sense lines SL1 --- SL5 as a result of the electromagnetic induction between these sense lines and the coordinate indicator 1 is amplified by the amplifying circuit 231 into amplified signal s31, is demodulated by the demodulating circuit 232 into amplitude data s32, and is converted by the AID converting circuit 233 to a digital value s33. The A/D converting circuit 233 and the calculating circuit 234 can be realised with the use of a one chip microprocessor. The calculating circuit 234 calculates a coordinate value s34 that has been indicated by the coordinate indicator 1 by the use of the AID converted amplitude s33 and the scanning-circuit selection signal s4 output from the control circuit 24.

The status detecting circuit 22 is also connected to the detecting side scanning circuit 26 and inputs the induction signal s3. The internal structure of this circuit is illustrated in Fig. 4. As illustrated, the status detecting circuit 22 is composed of an amplifying circuit 221, demodulating circuit 222 and amplitude detecting circuit 223. As will be explained later, the status detecting circuit 22 inputs the induction signal s3 which, when a status signal is transmitted from the coordinate indicator 1, is modulated by the coordinate indicator 1 and demodulates the amplitude thereof and then detects the transmitted status.

The control circuit 24 supplies the selection signal s4 to the exciting side scanning circuit 25 and to the detecting side scanning circuit 26 as mentioned above and also controls the other circuits to thereby perform control of the coordinate reading operations. The control circuit 24 is also realised as a partial function of the microprocessor.

Next, regarding the operation of this embodiment, (1) the coordinate calculating operation, (2) the power connection operation within the coordinate indicator and (3) the status transmission operation will be explained in this order.

(1) Coordinate Calculating Operation

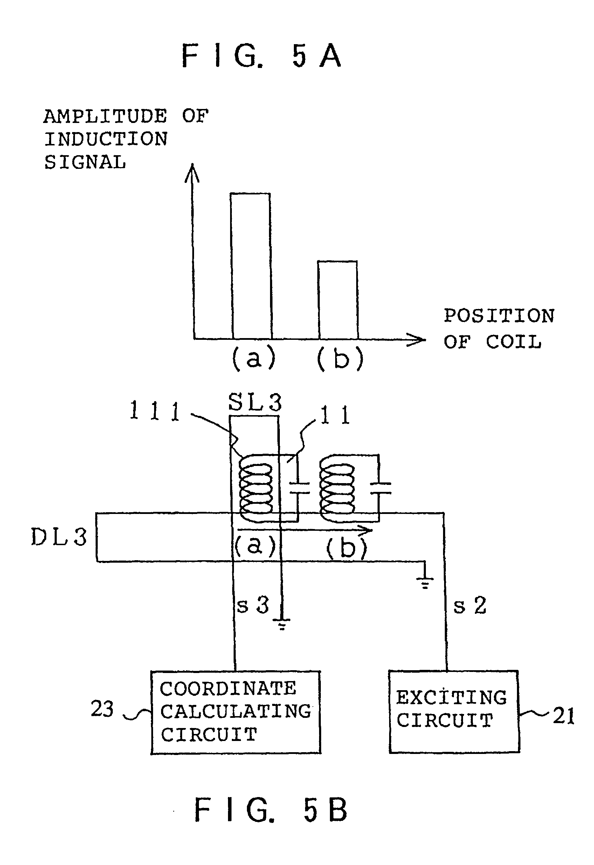

The coordinate calculating operation will now be explained with reference to Figs. 5 to 10. First, the basic principle of the coordinate calculation will be explained with reference to Figs. 5

Fig. 5B is a view illustrating a state where the exciting line DL3 and sense line SL3 have been selected by the exciting side scanning circuit 25 and detecting side scanning circuit 26, respectively. It is to be noted here that the exciting side scanning circuit 25 and detecting side scanning circuit 26 have been omitted, the illustration being made such that the exciting circuit 21 is connected directly to the exciting line DL3 and the coordinate calculating circuit 23 is connected directly to the sense line SL3.

First, consider a case where the coil 111 of the resonant circuit 11 has been spaced away from the exciting line DL3 and sense line SL3. In this case, since the exciting line DL3 and sense line SL3 intersect each other at a right angle, no electromagnetic induction occurs between the two. Next, as illustrated in Fig. 5(B), consider a case where the coil 111 is approached to an intersection area of the two intersecting each other. In this case, the exciting line DL3 and sense line SL3 are coupled together by the resonant circuit 11 that includes the coil 111, whereby the induction signal s3 is induced in the sense line SL3. The amplitude of this induction signal s3 is a function that uses the position of the coil 111 as a variable. Namely, this amplitude has the tendency that when the coil 111 is located at the center of the intersection area (the position (a) in Figs. 5A and 5B), the amplitude becomes maximum and, as the coil 111 is moved away from the intersection area, becomes small (the position (b) in Figs. 5A and 5B).

Next, an explanation will be given of the distribution of the induction signal s3 that is obtained when the exciting lines DL1 --- DL5 and sense lines SL1 --- S15 have been selected sequentially. The selecting operation for selecting the exciting lines and sense lines is called "scanning operation" here. The control circuit 24 performs its scanning operation as follows. The control circuit 24 supplies the selection signal s4 to the exciting side scanning circuit 25 and thereby selects the exciting line DL1. In this state, the control circuit 24 supplies the selection signal s4 to the detecting side scanning circuit 26 in units of a prescribed period and selects the sense lines SL1, SL2, SL3, SL4 and SL5 sequentially in this order. After having selected up to the sense line SL5, the control circuit 24 selects the exciting line DL2 next and goes on selecting the sense lines SL1 --- SL5 similarly. The control circuit 24 performs these selecting operations until the exciting line DL5 is selected and when its selecting operation has been finished by the exciting line DL5 and sense line SL5 being selected, terminates its selecting operation as the end of one scanning period, the selecting operation returning again to the exciting line DL1 whereby the same processing is executed repeatedly.

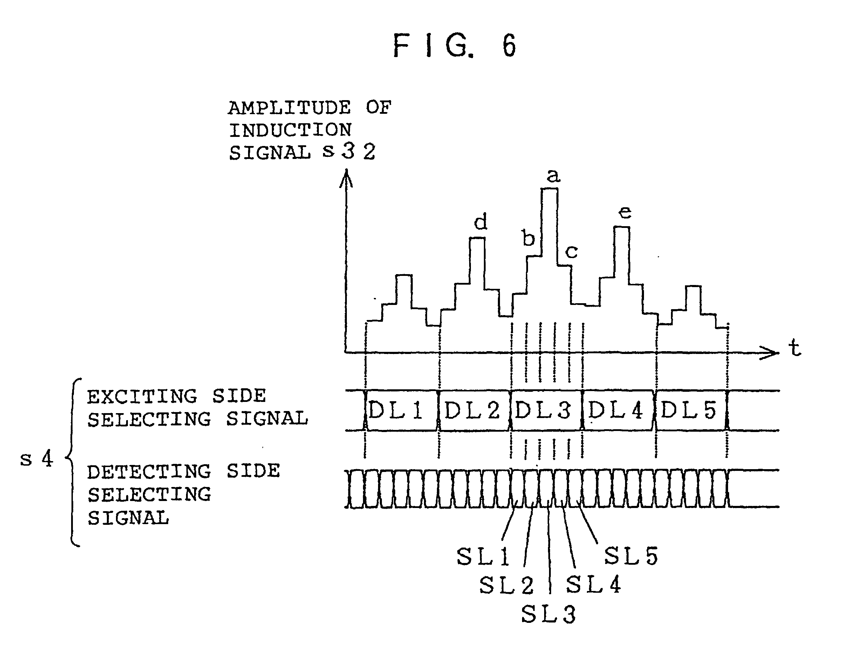

Fig. 6 is a view illustrating selected states of the exciting lines DL1 --- DL5 and sense lines SL1 --- SL5 when these lines are scanned and the amplitudes s32 of the induction signals s3 that have been induced in the sense lines SL1 --- SL5. This figure corresponds to a state wherein the coil 111 is placed in the intersection area of the exciting lines DL3 and sense lines SL3 intersecting each other. In this state, when having selected the exciting line DL3 and sense line SL3, the largest induction signal (a) generates. Also, in the X direction, the second largest and third largest induction signals (b) and (c) generate in the adjacent sense lines SL2 and SL4 on both sides of the sense line SL3 respectively and, in the Y direction, the third largest and second largest induction signals (d) and (e) are generated from the adjacent exciting lines DL2 and DL4 on both sides of the exciting line DL3 respectively. As has been already explained, the largeness/smallness of the induction signal is determined depending on the distance between the intersection area between the selected exciting line and sense line and the coil 111.

The induction signal s3 that generates as a result of the scanning operation is demodulated within the coordinate calculating circuit 23 into amplitude data s32 and thereafter is converted by the AID converting circuit 233 into a digital value s33 and thereafter is input to the calculating circuit 234.

The method of performing positional calculation from the amplitude data of the induction signal can be realised by a method that is disclosed in connection with the conventional coordinate reading device. The method of performing coordinate calculation will hereafter be explained.

The calculating circuit 234 detects from the amplitude data s33 of the digitised induction signal which as the scan proceeds is input sequentially, the maximum amplitude data corresponding to a sense line and exciting line and the amplitude data corresponding to the adjacent sense and exciting lines on both sides of these sense and exciting lines. Regarding the adjacent sense and exciting lines, detection is performed of the X and Y directions, separately. Although in the following explanation reference will be made to only the X direction alone, detection can be performed of the Y direction in the same way. Each item of amplitude data is given the following symbol.

Vp --- Maximum amplitude data: this data is called "peak data".

Vph -- The second largest amplitude data that corresponds to an adjacent sense line to the sense line wherein the maximum amplitude data has generated.

Vp1 -- The third largest amplitude data that corresponds to an adjacent sense line to the sense line wherein the maximum amplitude data has generated.

Regarding the sense line wherein the maximum amplitude data has generated, the sense-line number is stored. This is called "a peak address" which is represented as "P adrs". The peak address represents the approximate position at which the coordinate indicator 1 has been placed.

When the detected maximum amplitude data Vp is larger than a predetermined threshold value, it being determined that the coordinate indicator 1 is situated close to the tablet 2, the following detailed coordinate calculating operation continues to be performed. On the other hand, when the detected maximum amplitude data is smaller than the threshold value, it being determined that the coordinate indicator 1 is not sufficiently close to the tablet 2, detailed coordinate calculation is not performed and the operation returns again to the scanning operation. The threshold value for making a determination on the performance of the coordinate calculation is experimentally determined previously based on the product specification regarding the necessary reading height.

When it has been determined that the coordinate indicator 1 is sufficiently close to the tablet 2, a further detailed position thereof is determined by calculating the peak data and the adjacent amplitude data on both sides thereof. To this end, first, the following Q value is calculated:

$$Q = (Vp - Vph)/(Vp - Vp1) \hspace{3cm} \text{(Equation 1)}$$

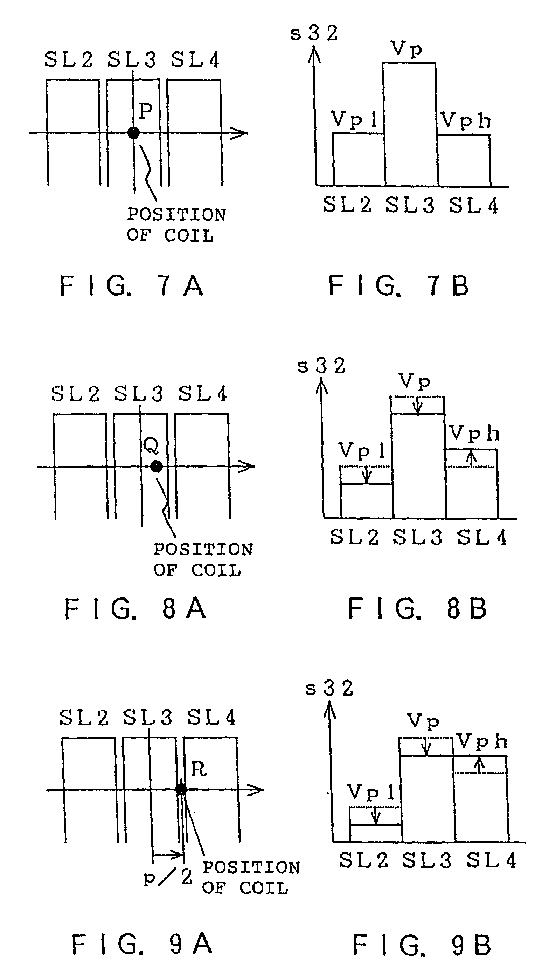

This Q value has the following nature. Consider a case where as illustrated in Fig. 7A the coil 111 is placed at the center, or point P, of the sense line SL3. When in this state the sense line SL3 is selected, as explained already a maximum induction signal generates in this sense line SL3 during the scanning operation. The calculating circuit 234 stores this peak data Vp and its corresponding sense line position. The sense line position is stored as a number for convenience of the succeeding calculations. In a case of this example, SL1 is set as a reference sense line and this sense line is numbered "0". Accordingly, in this case, P adrs = 2 is stored. As illustrated in Fig. 7B, when the sense line SL2 has been selected, the induction signal that is smaller than the peak data Vp is induced in the sense line SL2, whereby the amplitude data Vp1 is input to the calculating circuit 234. Also, when the sense line SL4 has been selected, the amplitude data Vph is input to the calculating circuit 234. When the coil 111 is placed at the point P, the effect of the electromagnetic induction is the same for the sense line SL2 and the sense line SL4. Therefore, as illustrated in Fig. 7(B), Vph = Vp1. Therefore, Q = 1 from the equation 1.

Next, as illustrated in Fig. 8A, when the coil 111 is moved in the X direction and is placed at the position Q, the induction signals that are induced in the sense lines SL2 and SL3 become smaller and conversely the induction signal that is induced in the sense line SL4 becomes larger. As a result, as illustrated in Fig. 8B, Vp and Vp1 become smaller and Vph becomes larger, whereby the Q value of the equation 1 becomes a value that is smaller than 1.

When the coil 111 is further moved and located at the position of a point R, as shown in Fig. 9A, i.e., when the coil 111 has been moved from the position in Fig. 7A by a distance that corresponds to 1/2 of the sense line pitch (p), the Q value of the equation 1 becomes minimum. At this time, as illustrated in Fig. 9B, the magnitudes of the induction signals that are induced in the sense lines SL3 and SL4 are same, with the result that Vp = Vph. Therefore, Q = 0 from the equation 1.

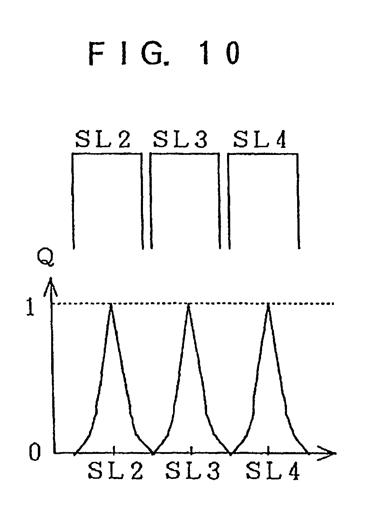

When the coil 111 is moved leftward from the position in Fig. 7A, also, the Q value is determined from the equation 1. In this case also, the tendency of increase or decrease in the Q value is the same. As understood from the foregoing, as illustrated in Fig. 10, the Q value changes from 1 to 0 in units of a 1/2 sense-line pitch, namely corresponds to a detailed position between the sense lines in the ratio of 1 : 1. If this characteristic of the Q value is experimentally determined previously, it is possible to determine a detailed position of the coil between the sense lines by determining the Q value from the amplitude data of the induction signals.

The indicated position where the coil 111 is placed is determined by performing adding and subtracting operations on the approximate position that is obtained from the peak address and the detailed position that has been determined hereinabove. The position calculating equations are shown as an equation 2 and an equation 3 below.

The indicated position

$$= P\ adrs \times p + f(Q) \qquad \text{(Equation 2)}$$

provided, however, that in this case the Vph is located on the right side of the Vp. Or,
the indicated position

$$= P\ adrs \times p - f(Q) \qquad \text{(Equation 3)}$$

provided, however, that the Vph is located on the left side of the Vp.

To explain the symbols once again,

P adrs : Peak address,
p : Lying pitch of the sense lines, and
f(Q) : Detailed position between the sense lines that corresponds to the Q value.

The position that has been indicated by the coordinate indicator 1 is determined as mentioned above.

(2) Power Connecting Operation of the Coordinate Indicator

Next, an explanation will be given of the power source connecting operation in the coordinate indicator 1. As was explained already, the amplitude of the induction signal s3 that was induced in the sense lines of the tablet 2 had a value which corresponded to the distance between the tablet 2 and the coordinate indicator 1. As in the case of the induction signal s3, the magnitude of the current that flows in the resonant circuit 11 of the coordinate indicator 1 also has a value which corresponds to the distance between the tablet 2 and the coordinate indicator 1. Although in the explanation of the coordinate calculation reference was made to the horizontal position of the coordinate indicator 1, the magnitude of the current that flows in the resonant circuit 11 changes depending also on the vertical position, namely the distance between the tablet 2 and the coordinate indicator 1 that is moved toward or away from the tablet 2. If the coordinate indicator 1 is distant from the tablet 2, the current that flows in the resonant circuit 11 is of a very small magnitude. In this case, of course, the current that flows in the sense lines is also very small in magnitude, with the result that no coordinate calculation is performed. As the coordinate indicator 1 is moved toward the tablet 2, the current that flows in the resonant circuit 11 also increases and simultaneously the current that flows in the sense lines also increases, with the result that the coordinate calculation is performed.

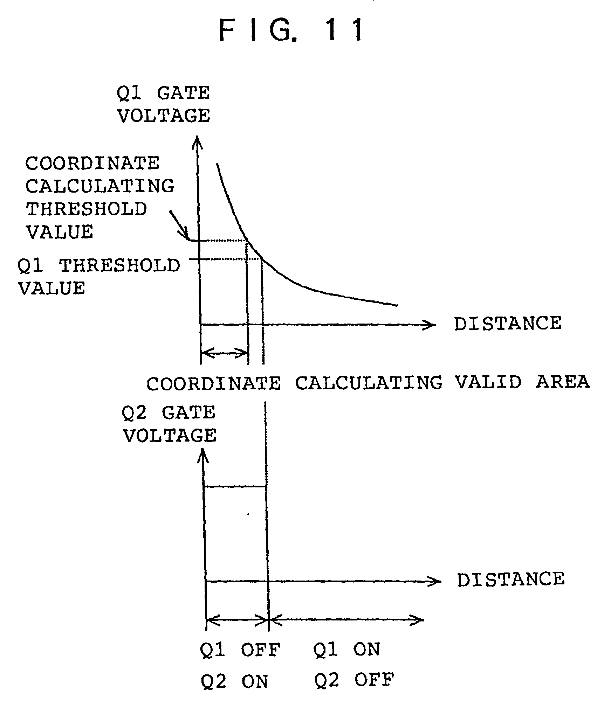

In the present invention, in dependence on a determination of the magnitude of the current flowing in the resonant circuit 11 as mentioned above, power is selectively supplied to an active circuit within the coordinate indicator 1. The power supplying operation will now be explained while referring to Figs. 1 and 11.

An a.c. current that has been induced in the resonant circuit 11 is first changed into a d.c. current by a wave detector circuit that is composed of a diode D1 and is thereby converted into a voltage that corresponds to the amplitude. This voltage is applied to the gate of the N-channel FET Q1. As illustrated in Fig. 11, this voltage has a value that corresponds to the distance between the coordinate indicator 1 and the tablet 2. Also, the threshold value of the FET Q1 is given as the value that is illustrated in Fig. 11. Accordingly, when the gate voltage is lower than this threshold value, the FET Q1 becomes "off" and as a result the output thereof becomes high. As the coordinate indicator 1 is moved toward the tablet 2, the gate voltage gradually increases, with the result that if the gate voltage has thus exceeded the threshold value, the FET Q1 becomes "on" and as a result the output thereof becomes low. This output signal becomes a gate signal that controls the "on"/"off" operation of the P-channel PET Q2 that becomes the power source switch element 14. When the gate signal is high, the FET Q2 is kept "off". In this state, the battery 13 that is connected to the source of the FET Q2 is not connected to the status transmitting circuit 15 that is connected to the drain of the FET Q2. On the other hand, when the gate signal becomes low, the FET Q2 becomes "on", with the result that the battery 13 is connected to the status transmitting circuit 15. As mentioned above, only when the coordinate indicator 1 is located close to the tablet 2, it is arranged for the battery 13 to be connected to the status transmitting circuit 15.

At what position of the coordinate indicator 1 having approached the tablet 2 the power source should be connected is determined depending on the threshold value of the FET Q1.

Because of Fig. 1 being a typical view, in Fig. 1 the illustration is made such that the threshold value of the FET Q1 per se is used as the threshold value for the Q1 element. However, this threshold value may be set by additionally providing a suitable bias circuit as necessary. Also, when the coordinate indicator 1 has approached the tablet 2 and as a result the induction signal that has been induced in the sense lines has become large and as a result the coordinate calculation has become effective, since within the coordinate indicator 1 it is needed to connect the power source beforehand, as illustrated in Fig. 11 the threshold value of the FET Q1 is usually set beforehand to be a value that is smaller than the threshold value for use in the coordinate calculation. It is to be noted that although the threshold value for the coordinate calculation is determined based on the amplitude data s33 of the induction signal s3 within the tablet 2, since the amplitude data s33 of the induction signal s3 and the amplitude data of the resonant circuit 11, i.e., gate voltage of the Q1 element have the same increase or decrease tendency with respect to the distance, in Fig. 11 the coordinate calculation threshold value is shown in such a way as to be projected over the FET Q1 gate voltage.

In the construction of Fig. 1, the battery 13 is connected at all times to the resonant state detecting circuit 12. However, since this circuit handles static signals, almost no current flows therethrough when the FET Q1 is in an "off" state, no care is needed to be taken about the consumption of the battery 13 power. On the other hand, the status transmitting circuit 15 as described later sometimes performs alternating current operations depending on the construction thereof. Therefore, the current consumption which is made when this circuit 15 has operated becomes much larger than that which is made when the circuit 12 has operated. The present invention is intended to control the connection of the power to the power source utilising circuits such as the status transmitting circuit 15.

(3) Status Transmission Operation

Next, an explanation will be given of the operation of transmitting a status from the coordinate indicator 1 to the tablet 2. The status which is referred to in this embodiment means a state of the status switch 16 which is provided in the coordinate indicator 1.

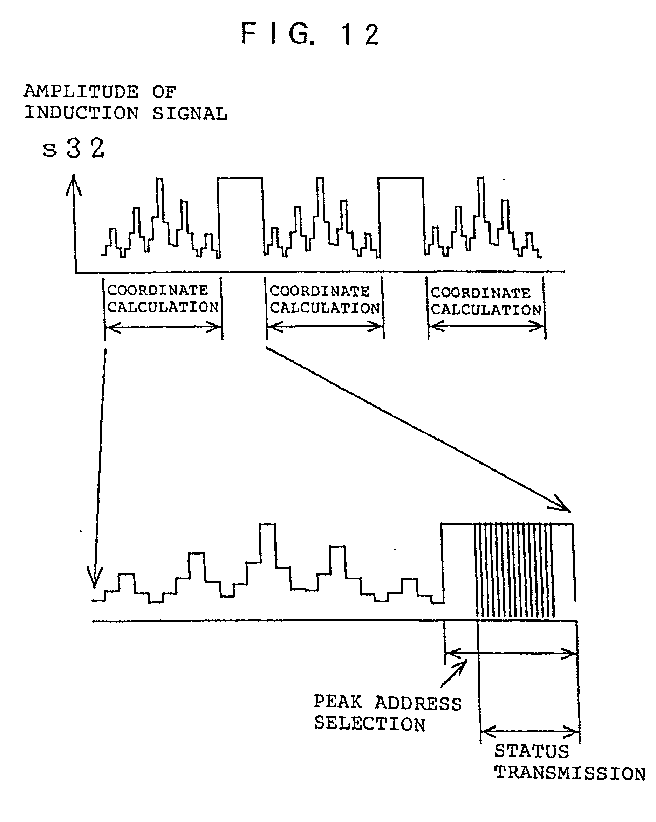

Fig. 12 is a diagram having the amplitude data s32 of the induction signals s3 illustrated along the time axis. The figure indicates that the scanning operation is performed periodically. The figure also indicates that a period for transmitting the status is provided between one and a next one scanning operation. When having finished the scanning operation one time, the control circuit 24 selects again the peak address that has been detected by performance of this scanning operation. In this state, the coupled intensity among the selected exciting line, coordinate indicator 1 and selected sense line is the highest.

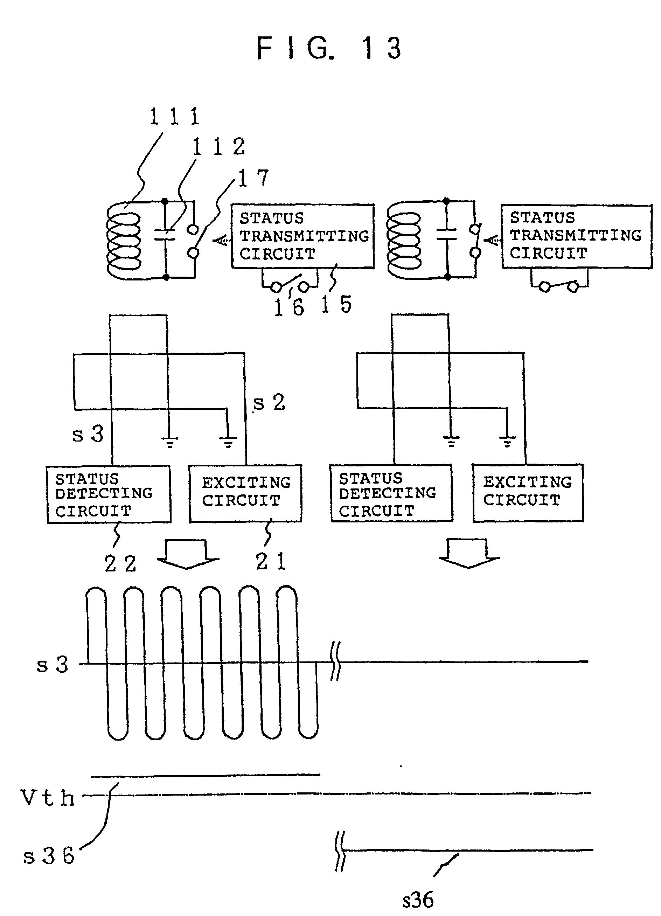

Next, the operation of transmitting the status of the coordinate indicator 1 to the tablet 2 will be explained with reference to Figs. 13, 2 and 4. In a state where the peak address is selected as mentioned above, the status transmitting circuit 15 reads the status switch 16 and opens or closes the switch element 17 according to the read state thereof. For example, control is done so that when the status switch 16 is opened, the switch element 17 may also be opened and so that when the status switch 16 is closed, the switch element 17 may also be closed.

As illustrated in Fig. 13, the induction signal s3 is induced when the switch element 17 is opened and as a result the resonant circuit is not shortcircuited whereas the induction signal s3 is not induced when the switch element 17 is closed and as a result the resonant circuit becomes shortcircuited. As mentioned above, by the switch element 17 being opened or closed, the induction signal s3 that is induced in the sense line is modulated.

The status detecting circuit 22 of the tablet 2 inputs the thus modulated induction signal s3. The amplifying circuit 221 within the status detecting circuit 22 amplifies the induction signal s3 which is an a.c. signal to produce an amplified signal s35. The demodulating circuit 222 demodulates the amplified signal s35 which is an a.c. signal and converts this signal to d.c. signal amplitude data s36. The amplitude detecting circuit 223 compares this amplitude data s36 with the threshold value Vth to thereby discriminate an opened or closed state of the switch element 17 of the coordinate indicator 1. Since the state of the switch element 17 and the operational state of the status switch 16 are in correspondence with each other, it is possible to detect the operational state of the status switch 16 from the state of the switch element 17, i.e., the amplitude data of the amplitude signal s36. In this embodiment, if the amplitude signal s36 is larger than the threshold value Vth, it is determined that the status switch 16 is opened whereas if the amplitude signal s36 is smaller than this threshold value Vth, it is determined that the status switch 16 is closed.

Regarding the above-explained status transmitting method, reference has been made to the basic operation concerned therewith. Therefore, actually, other various transmitting methods can be considered to be available. For example, in a case where there are a plurality of the status switches 16 and it is wanted to transmit a plurality of the data items, the switch element 17 may be made "on/off" according to the binary data items that correspond to the statuses of the status switches 16 to thereby perform serial status transmission. In such a case, an alternating current circuit such as a clock circuit becomes needed as the status transmitting circuit. The transmitting operation also becomes an alternating current operation. As a result, the current consumption increases. However, in even this case, according to the present invention, since when the coordinate indicator 1 is out of use the circuit is disconnected from the power source, it is possible to decrease the consumption of the battery power.

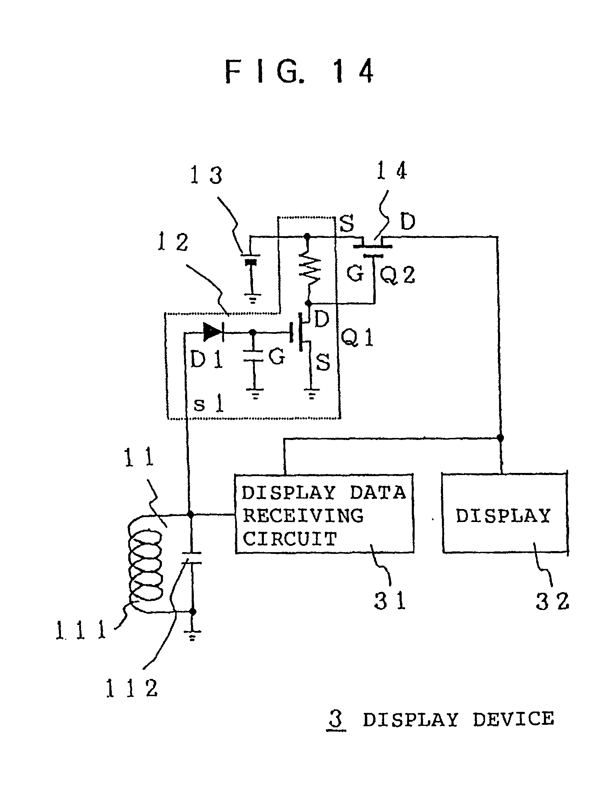

Next, an explanation will be given of an embodiment of a display device according to the present invention. Fig. 14 is a functional block diagram of this embodiment.

This device is a display device which is used jointly with the coordinate reading device and is adapted to receive display data that is transmitted from the tablet and display this display data on a display. As a concrete form of product, there is a coordinate indicator having a construction wherein an LCD is provided in the coordinate indicator explained in the preceding embodiment and operation instructing data with respect to an operator is displayed there. However, the coordinate indicator of this type is not limited thereto. In a coordinate indicator such as that mentioned above, it is sufficient if the display can be made only when the coordinate indicator is placed on the tablet.

In the constructional diagram of Fig. 14, the construction of the resonant circuit 11 and resonant state detecting circuit 12 and the construction of the battery 13 and power source switch element 14 are the same as those in the preceding embodiment. In this display device 3, a display data receiving circuit 31 and a display 32 are newly provided. The display data receiving circuit 31 is connected to the resonant circuit 11 and the display 32 is further connected thereto so as to display the received data. Further, to each of these circuits there is connected the drain of the FET Q2 that constitutes the power switch element 14 to thereby cause the power to be supplied from the Q2 element.

The operation of connecting to the power source when this display device 3 is placed on the tablet and the both have been electrically coupled to each other is the same as that in the preceding embodiment. In this state, the tablet modulates, for example, the excitation signals serially by the display data and transmits them. In the display device 3, the thus modulated display data are received by the resonant circuit 11. The display data receiving circuit 31 demodulates these display data and outputs them to the display 32. The display 32 inputs and displays them. The construction for performing transmission/reception of these data, the construction of the display 32, etc. are not limited to the example referred to in this explanation but may be realised using conventional techniques.

Although in the display device of this embodiment reference has been made to the construction wherein display is made of the display data that is transmitted from the tablet, it may be also arranged not to receive from the tablet but to display internal data.

Although in the foregoing description explanations have been given to the two representative embodiments, the essence of the present invention lies in the respect of making a determination on the coupling between the tablet and the device and of making a construction to connect the internal power source when it has been recognised that the both have been brought to a coupled state. Accordingly, the power source utilising circuits are not limited to the status transmitting circuit and display circuit but are considered to include other various circuits as explained above. The present invention can be similarly executed also with respect thereto. Also, in the device having such a construction, when no coupling occurs between the device and the tablet, the device can be disconnected from the power source, thereby it is possible to achieve the object of suppressing the consumption of the power source.

Of course, a device which has a construction wherein the status transmitting circuit 15 equipped with the status switch 16 and the display data receiving circuit 31 and display 32 are used concurrently is also included in the present invention. In this case, the timing for transmitting the status and the timing for receiving the display data are made to differ from each other.

Further, the present invention makes no selection of the kind of the battery 13. That is, the battery 13 is not needed to be a primary battery. That is, it is apparent that the present invention can be also applied to even a construction wherein a chargeable secondary battery is used as the battery 13 and charging means which can charge the secondary battery with wires or with the use of no wires is provided within the coordinate indicator 1 or display device 3.

In the present invention, there has been constructed a device used jointly with a coordinate reading device, the device being adapted to perform a prescribed operation through an electric coupling thereof with a tablet constituting the coordinate reading device, the device used jointly with the coordinate reading device being provided with:

induction signal detecting means for detecting an induction signal resulting from an electric coupling between the device and the tablet and, when the induction signal detecting means has detected the induction signal, outputs a detection signal;
power source circuit for supplying an electric energy to each of respective portions of the device;
a power source switch circuit which is connected to a power source supply line of the power source circuit and which is closed by a detection signal outputted from the induction signal detecting means to thereby connect the power source circuit to the respective portions of the device; and
a utilising circuit which when the power source switch circuit has been closed, receives a power source supply from the power source circuit and thereby performs its prescribed operation.

Also, in the present invention, there has been constructed a coordinate indicator used jointly with a coordinate reading device, the coordinate indicator being adapted to transmit a status signal to a tablet, which constitutes the coordinate reading device, through an electric coupling thereof with the tablet, the coordinate indicator used jointly with the coordinate reading device being provided with:

a resonant circuit having a resonant frequency that is substantially equal to the frequency of an electromagnetic wave generated from the tablet;
an induction signal detection circuit for, when the resonant circuit has substantially resonated with the electromagnetic wave, detecting an induction signal that is induced in the resonant circuit and
outputs a detection signal;
a power source circuit for supplying an electric energy to each of respective portions of the device;
a power source switch circuit which is connected to a power source supply line of the power source circuit and which is closed by a detection signal outputted from the induction signal detecting circuit to thereby connect the power source circuit to the respective portions of the device; and
a status transmitting means which when the power switch circuit has been closed, receives a power supply from the power source circuit and thereby transmits a status signal to the tablet.

According to the above-constructed device, when the device is not located on the tablet, i.e. when the device is not in use, no induction signal is detected. Therefore, the power source switch circuit is not closed, with the result that no power is supplied to each of the respective portions of the power source circuit. On the other hand, when the device is located on the tablet, the induction signal detecting means or induction signal detecting circuit detects an induction signal that results from coupling with the tablet and closes a power source switch circuit according to the detected result. Closure of the power source switch circuit causes the power to be supplied from the power source circuit to the respective portions, with the result that the circuits at the respective portions perform their prescribed operations. As mentioned above, only when the device is placed in a state of use, the power is supplied to each of the respective portions.

Accordingly, the following effects can be obtained by the present invention.

(1) It is possible to realise the device which is used jointly with the coordinate reading device and in which the power consumption can be decreased. And,
(2) It is possible to realise the coordinate indicator which is used jointly with the coordinate reading device and in which the power consumption can be decreased.

**Claims**

1. A device (1) for performing a prescribed operation through an electromagnetic coupling with a tablet (2) constituting a co-ordinate reading device, the device (1) comprising:

a power source means (13), a functioning means (15) for operating by receiving an electric energy from the power source means, a switch means (14) provided between the power source means and the functioning means, and a control means (12) for outputting a signal for controlling "on"/"off" operations of the switch means, and

**characterised by** further comprising;
a resonant circuit (11), wherein the control means outputs a signal which makes the switch means ON, whereby the electrical energy is supplied to the functioning means, when a state of electromagnetic coupling of the resonant circuit with the tablet (2) is greater than a predetermined coupling intensity value.

2. A device (1) as claimed in claim 1, wherein the tablet comprises a co-ordinate reading device and the device (1) is adapted to perform a prescribed operation with the co-ordinate reading device;
and wherein the resonant circuit (11) has a resonant frequency which is substantially equal to a frequency of an electromagnetic wave generated from the tablet;
**characterised in that** the control means comprises an induction signal detection circuit (12) for detecting an induction signal induced in the resonant circuit and for outputting a detection signal when the resonant circuit substantially resonates with the electromagnetic wave;
the switch means (14) comprises a power source switch circuit (14) connected to a power source supply line of the power source means for making a circuit thereof close by a detection signal outputted from the induction signal detecting means and for connecting the power source means to respective portions of the device;
and the functioning means (15) comprises a utilising circuit (15) receptive a power source supply from the power source means when the power source switch circuit is closed for performing its prescribed operation.

3.  A device (1) as claimed in claim 2 **characterised in that** the device (1) comprises a co-ordinate indicator (1) and the utilising circuit (15) comprises a status transmitting means (15) for transmitting a status to the tablet (2).

4.  A device (1) as claimed in claim 3, **characterised in that** the status transmitting means is connected to the resonant circuit (11).

5.  A device (1) as claimed in any one of claims 2 to 4 **characterised in that** the utilising circuit (15) comprises a display device (32) for displaying display data.

6.  A device as claimed in claim 5, **characterised in that** the display device (32) displays display data transmitted from the tablet (2).


**Patentansprüche**

1.  Vorrichtung (1) zum Durchführen einer vorgegebenen Operation über eine elektromagnetische Kopplung mit einem Tablett (2), das eine Koordinatenlesevorrichtung bildet, wobei die Vorrichtung (1) umfaßt:

    ein Stromquellenmittel (13), ein Funktionsmittel (15) für eine Operation durch Empfangen elektrischer Energie vom Stromquellenmittel, ein Schaltmittel (14), das zwischen dem Stromquellenmittel und dem Funktionsmittel vorgesehen ist, und ein Steuermittel (12) zum Ausgeben eines Signals zum Steuern der "Ein/Aus"-Operationen des Schaltmittels,
    und **dadurch gekennzeichnet ist, daß** es ferner umfaßt:

    eine Resonanzschaltung (11), wobei das Steuermittel ein Signal ausgibt, das das Schaltmittel einschaltet, wodurch elektrische Energie zum Funktionsmittel geliefert wird, wenn ein Zustand der elektromagnetischen Kopplung der Resonanzschaltung mit dem Tablett (2) größer ist als ein vorgegebener Kopplungsintensitätswert.

2.  Vorrichtung (1) nach Anspruch 1, bei der das Tablett eine Koordinatenlesevorrichtung umfaßt und die Vorrichtung (1) dafür konfiguriert ist, eine vorgegebene Operation mit der Koordinatenlesevorrichtung durchzuführen; und
    wobei die Resonanzschaltung (11) eine Resonanzfrequenz aufweist, die im wesentlichen gleich einer Frequenz einer vom Tablett erzeugten elektromagnetischen Welle ist;
    **dadurch gekennzeichnet, daß** das Steuermittel eine Induktionssignal-Erfassungsschaltung (12) umfaßt, um ein in der Resonanzschaltung induziertes Signal zu erfassen und ein Erfassungssignal auszugeben, wenn die Resonanzschaltung im wesentlichen mit der elektromagnetischen Welle in Resonanz ist;
    das Schaltmittel (14) eine Stromquellenschaltvorrichtung (14) umfaßt, die mit einer Stromversorgungsleitung des Stromquellenmittels verbunden ist, um deren Schaltkreis zu schließen durch ein von Induktionssignalerfassungsmittel ausgegebenes Erfassungssignal, und um das Stromquellenmittel mit den jeweiligen Abschnitten der Vorrichtung zu verbinden;
    und das Funktionsmittel (15) eine Nutzschaltung (15) umfaßt, die eine Stromzufuhr von Stromquellenmittel empfängt, wenn die Stromquellenschaltvorrichtung geschlossen ist, um ihre vorgegebene Operation durchzuführen.

3.  Vorrichtung (1) nach Anspruch 2, **dadurch gekennzeichnet, daß** die Vorrichtung (1) einen Koordinatenindikator (1) umfaßt und die Nutzschaltung (15) ein Statusübertragungsmittel (15) zum Übertragen eines Status zum Tablett (2) umfaßt.

4.  Vorrichtung (1) nach Anspruch 3, **dadurch gekennzeichnet, daß** das Statusübertragungsmittel mit der Resonanzschaltung (11) verbunden ist.

5.  Vorrichtung (1) nach irgendeinem der Ansprüche 2 bis 4, **dadurch gekennzeichnet, daß** die Nutzschaltung 15 eine Anzeigevorrichtung (32) zum Anzeigen von Anzeigedaten umfaßt.

**6.** Vorrichtung nach Anspruch 5, **dadurch gekennzeichnet, daß** die Anzeigevorrichtung (32) die vom Tablett (2) übertragenen Anzeigedaten anzeigt.

**Revendications**

**1.** Dispositif (1) destiné à effectuer une opération prescrite par l'intermédiaire d'un couplage électromagnétique avec une tablette (2) constituant un dispositif de lecture de coordonnées, le dispositif (1) comprenant :

des moyens formant source de puissance (13), des moyens opérationnels (15) destinés à fonctionner en recevant une énergie électrique provenant des moyens formant source de puissance, des moyens de commutation (14) prévus entre les moyens formant source de puissance et les moyens opérationnels, et des moyens de commande (12) destinés à sortir un signal pour commander les opérations de "fermeture"/"ouverture" des moyens de commutation, et **caractérisé en ce qu'**il comprend, de plus :

un circuit résonant (11), dans lequel les moyens de commande sortent un signal qui ferme les moyens de commutation, de telle manière que l'énergie électrique soit fournie aux moyens opérationnels, lorsqu'un état du couplage électromagnétique du circuit résonant avec la tablette (2) est supérieur à une valeur d'intensité de couplage prédéterminée.

**2.** Dispositif (1) selon la revendication 1, dans lequel la tablette comprend un dispositif de lecture de coordonnées et le dispositif (1) est adapté pour effectuer une opération prescrite avec le dispositif de lecture de coordonnées ;
et dans lequel le circuit résonant (11) a une fréquence de résonance qui est sensiblement égale à une fréquence d'une onde électromagnétique générée à partir de la tablette ;
**caractérisé en ce que** les moyens de commande comprennent un circuit de détection de signal d'induction (12) pour détecter un signal d'induction induit dans le circuit résonant et pour sortir un signal de détection lorsque le circuit résonant résonne sensiblement avec l'onde électromagnétique ;
les moyens de commutation (14) comprennent un circuit de commutation de source de puissance (14) connecté à une ligne d'alimentation des moyens formant source de puissance pour fermer un circuit de ceux-ci par un signal de détection sorti des moyens de détection de signal d'induction et pour connecter les moyens formant source de puissance à des parties respectives du dispositif ;
et les moyens opérationnels (15) comprennent un circuit d'utilisation (15) qui reçoit une alimentation des moyens formant source de puissance lorsque le circuit de commutation de source de puissance est fermé pour effectuer son opération prescrite.

**3.** Dispositif (1) selon la revendication 2, **caractérisé, en ce que** le dispositif (1) comprend un indicateur de coordonnées (1), et le circuit d'utilisation (15) comprend des moyens de transmission d'état (15) pour transmettre un état à la tablette (2).

**4.** Dispositif (1) selon la revendication 3, **caractérisé en ce que** les moyens de transmission d'état sont connectés au circuit résonant (11).

**5.** Dispositif (1) selon l'une quelconque des revendications 2 à 4, **caractérisé en ce que** le circuit d'utilisation (15) comprend un dispositif d'affichage (32) pour afficher des données d'affichage.

**6.** Dispositif selon la revendication 5, **caractérisé en ce que** le dispositif d'affichage (32) affiche les données d'affichage transmises par la tablette (2).

# F I G. 1

1  COORDINATE
   INDICATOR

FIG. 2

FIG. 3

s3 → AMPLIFYING CIRCUIT 231 → s31 → DEMODULATING CIRCUIT 232 → s32 → A/D CONVERTING CIRCUIT 233 → s33 → CALCULATING CIRCUIT 234 → s34

s4 → CALCULATING CIRCUIT

23

FIG. 4

s3 → AMPLIFYING CIRCUIT 221 → s35 → DEMODULATING CIRCUIT 222 → s36 → AMPLITUDE DETECTING CIRCUIT 223

22

# F I G. 5 A

AMPLITUDE OF
INDUCTION
SIGNAL

POSITION
OF COIL

(a)     (b)

SL3

111     11

DL3

(a)     (b)

s3      s2

23 ～ COORDINATE
CALCULATING
CIRCUIT

EXCITING
CIRCUIT ～21

# F I G. 5 B

# FIG. 6

AMPLITUDE OF
INDUCTION
SIGNAL s32

EXCITING SIDE
SELECTING SIGNAL

| DL1 | DL2 | DL3 | DL4 | DL5 |
|-----|-----|-----|-----|-----|

s4

DETECTING SIDE
SELECTING
SIGNAL

SL1     SL5

SL2   SL4

SL3

EP 0 773 509 B1

SL2 SL3 SL4

P

POSITION
OF COIL

F I G. 7 A

s32

Vp

Vp1    Vph

SL2 SL3 SL4

F I G. 7 B

SL2 SL3 SL4

Q

POSITION
OF COIL

F I G. 8 A

s32

Vp

Vp1    Vph

SL2 SL3 SL4

F I G. 8 B

SL2 SL3 SL4

R

p/2    POSITION
OF COIL

F I G. 9 A

s32

Vp    Vph

Vp1

SL2 SL3 SL4

F I G. 9 B

18

# F I G. 1 0

# F I G. 1 1

Q1 GATE
VOLTAGE

COORDINATE
CALCULATING
THRESHOLD
VALUE

Q1 THRESHOLD
VALUE

DISTANCE

COORDINATE CALCULATING VALID AREA

Q2 GATE
VOLTAGE

DISTANCE

Q1 OFF   Q1 ON
Q2 ON   Q2 OFF

# F I G. 1 2

AMPLITUDE OF
INDUCTION SIGNAL

s 3 2

COORDINATE
CALCULATION

COORDINATE
CALCULATION

COORDINATE
CALCULATION

PEAK ADDRESS
SELECTION

STATUS
TRANSMISSION

# FIG. 13

# F I G. 1 4

DISPLAY DATA
RECEIVING
CIRCUIT

DISPLAY

31

32

3 DISPLAY DEVICE

# FIG. 15
# PRIOR ART